**Europäisches Patentamt**

**European Patent Office**

**Office européen des brevets**

(19)

(11) Veröffentlichungsnummer: **0 116 691**
A2

(12) # EUROPÄISCHE PATENTANMELDUNG

(21) Anmeldenummer: **83111007.7**

(22) Anmeldetag: **04.11.83**

(51) Int. Cl.³: **G 11 B 21/00**
//G11B5/46, G11B5/41

(30) Priorität: **17.02.83 DE 8304588 U**

(43) Veröffentlichungstag der Anmeldung:
**29.08.84 Patentblatt 84/35**

(84) Benannte Vertragsstaaten:
**AT BE CH DE FR GB IT LI LU NL SE**

(71) Anmelder: **Deutsches Elektronen-Synchrotron DESY**
**Notkestrasse 85**
**D-2000 Hamburg 52(DE)**

(72) Erfinder: **Teske, Artur**
**Klaus-Groth-Strasse 2**
**D-2153 Neu-Wulmstorf(DE)**

(72) Erfinder: **Klimmeck, Dietrich**
**Rotating Memory Expertise GmbH Suhlenkamp 4**
**D-2359 Henstedt-Ulzburg 4(DE)**

(74) Vertreter: **UEXKÜLL & STOLBERG Patentanwälte**
**Beselerstrasse 4**
**D-2000 Hamburg 52(DE)**

(54) **Vorrichtung zur Inspektion von Schreib-Lese-Köpfen von Datenträgerplatten in EDV-Anlagen.**

(57) Ein Spiegelhalter (10) weist parallele Seitenwände (9, 11) auf, die einen Umlenkspiegel (4) und einen Prismenspiegel (6') halten. Außerdem sind in den Seitenwänden (9, 11) Lampen (8) zur Beleuchtung des Beobachtungsobjekts vorgesehen. Der Strahlengang von dem Prismenspiegel (6, 6') wird über den Umlenkspiegel (4) in eine Sammellinse (2) umgelenkt, welche in einer Linsenfassung (18) verstellbar gehalten ist. Mit Hilfe dieser Vorrichtung lassen sich Schreib-Lese-Köpfe von Datenträgerplatten für EDV-Anlagen im eingebauten Zustand auf Verunreinigungen und/oder Beschädigungen untersuchen.

Fig.3

**EP 0 116 691 A2**

**UEXKÜLL & STOLBERG**
PATENTANWÄLTE

BESELERSTRASSE 4
D·2000 HAMBURG 52

EUROPEAN PATENT ATTORNEYS

**0116691**

DR. J.-D. FRHR. von UEXKÜLL
DR. ULRICH GRAF STOLBERG
DIPL.-ING. JÜRGEN SUCHANTKE
DIPL.-ING. ARNULF HUBER
DR. ALLARD von KAMEKE
DR. KARL-HEINZ SCHULMEYER

1

Deutsches Elektronen-Synchrotron
DESY
Notkestraße 85

(20163/HU/wo)

2000 Hamburg 52

Oktober 1983

## Vorrichtung zur Inspektion von Schreib-Lese-Köpfen von Datenträgerplatten in EDV-Anlagen

Die Erfindung betrifft eine Vorrichtung zur Inspektion von Schreib-Lese-Köpfen von Datenträgerplatten in EDV-Anlagen.

Größere EDV-Anlagen verwenden zur Speicherung von Daten üblicherweise Datenträgerplatten, auf die mit Hilfe von Schreib-Lese-Köpfen Daten übertragen bzw. davon abgefragt werden. Die Schreib-Lese-Köpfe sind dazu in geringem Abstand über den Datenträgerplatten angeordnet, und zwar in einer Ausführung, die bei der Firma Control Data Corp. (CDC) üblich ist, an den Enden von Kragarmen, die über und unter eine horizontal angeordnete Datenträgerplatte fassen und in Richtung auf den Mittelpunkt der Platte bewegbar sind. Zum Schutz ihrer Oberfläche weisen die Schreib-Lese-Köpfe Keramiküberzüge auf, auf denen sich leicht Staubkörnchen oder andere Verschmutzungen ansammeln können. Dies ist insbesondere beim Austausch von Datenträgerplatten zu befürchten und kann zur Zerstörung der Platte führen. Daher müssen zumindest bei allen Wechselplattenstapeln in EDV-Anlagen die Schreib-Lese-Köpfe vor dem Einsetzen eines neuen Wechselplattenstapels und auch laufend während des Betriebs auf Verschmutzungen untersucht und von diesen befreit werden. Bislang ist eine solche Untersuchung nur durch Ausbau der Schreib-Lese-Köpfe möglich gewesen, was allerdings eine verhältnismäßig komplizierte und zeitaufwendige Montagearbeit bedeutet, die eine unerwünscht lange Abschaltzeit der EDV-Anlage zur Folge hat.

Es ist Aufgabe der Erfindung, eine Vorrichtung zur Inspektion von Schreib-Lese-Köpfen von Datenträgerplatten in EDV-Anlagen zu schaffen, mit der die Schreib-Lese-Köpfe ohne aufwendige Montagearbeiten auf schnelle und einfache Weise im eingebauten Zustand inspizierbar sind.

Zur Lösung dieser Aufgabe dient eine Vorrichtung der eingangs genannten Art, welche gekennzeichnet ist durch einen Spiegelhalter mit zwei zueinander etwa parallelen Seitenwänden, zwischen denen sich ein Umlenkspiegel und ein Beobachtungsspiegel erstrecken, durch mindestens eine in mindestens einer Seitenwand angeordnete Lampe, und durch eine etwa rechtwinkelig zum Strahlengang vom Beobachtungsspiegel zum Umlenkspiegel angeordnete Sammellinse, deren Brennweite größer ist als der optische Weg von einem in der Nähe des Beobachtungsspiegels zu betrachtenden Gegenstand zur Hauptebene der Sammellinse.

Dadurch wird erreicht, daß die Schreib-Lese-Köpfe im eingebauten Zustand auf Verunreinigungen oder Bruch

- 3 -                                    0116691

inspiziert werden können, indem man die Vorrichtung mit ihrem Beobachtungsspiegel zwischen die Schreib-Lese-Köpfe einschiebt und die Lampe oder die Lampen mit Strom versorgt. Aufgrund der etwa rechtwinkeligen Anordnung der Sammellinse zum Strahlengang vom Beobachtungsspiegel zum Umlenkspiegel können nun der obere und auch der untere Schreib-Lese-Kopf ohne Schwierigkeiten von oben inspiziert werden.

Vorzugsweise ist der Beobachtungsspiegel ein Prismenspiegel, dessen eine Fläche die Beobachtung des oberen Schreib-Lese-Kopfs gestattet, während seine andere Fläche gleichzeitig die Beobachtung des jeweils unteren Schreib-Lese-Kopfs zuläßt.

In einer anderen Ausführung ist der Beobachtungsspiegel ein Schwenkspiegel mit ein oder zwei Spiegelflächen. Im Falle von zwei Spiegelflächen liegen diese in Parallelebenen und ermöglichen bei geeigneter Schwenkung das Schwenkspiegels nacheinander das Beobachten des unteren sowie des oberen Schreib-Lese-Kopfs.

Vorzugsweise sind an den Innenflächen der Seitenwände des Spiegelhalters Führungsvorsprünge vorgesehen, die horizontale Ober- und Unterkanten aufweisen und welche die Halterungen der zu untersuchenden Schreib-Lese-Köpfe auseinander spreizen, während sie gleichzeitig zur Führung des Spiegelhalters beitragen.

In einer Ausführung der Erfindung sind die Seitenwände des Spiegelhalters wesentlich höher als der Abstand der Schreib-Lese-Köpfe, so daß die Vorrichtung nur bei entfernter Platte von vorn zwischen die freien Enden der Schreib-Lese-Köpfe einschiebbar ist.

In einer anderen Ausführungsform ist die Höhe der Seitenwände des Spiegelhalters gleich groß oder kleiner als der Abstand der Schreib-Lese-Kopfhalterungen, so daß der Spiegelhalter von der Seite her zwischen die Schreib-Lese-Köpfe einschiebbar ist. Dies hat den Vorteil, daß die Schreib-Lese-Köpfe lediglich von den Platten zurückgefahren werden müssen, ohne daß die Platten selbst entfernt zu werden brauchen. Bei diesem Ausführungsbeispiel ist zweckmäßigerweise noch ein weiterer Umlenkspiegel vorgesehen, welcher den in der Betrachtungsstellung für die Schreib-Lese-Köpfe parallel zu deren Mittellinie verlaufenden Strahlengang seitlich zu einem Fassungsträger für die Sammellinse umlenkt.

Anstelle von einer Lampe können auch zwei oder mehrere Lampen vorgesehen sein, die in den Seitenwänden des Spiegelhalters, und zwar beispielsweise in den Führungsvorsprüngen montiert sind und welche die Schreib-Lese-Köpfe von der Seite her streifend beleuchten.

Weitere vorteilhafte Ausgestaltungen der Erfindung ergeben sich aus der nachfolgenden Figurenbeschreibung und aus den Unteransprüchen.

Die Erfindung wird im folgenden anhand von Figuren näher erläutert; es zeigen:

Figur 1    eine perspektivische Ansicht eines ersten Ausführungsbeispiels für einen von vorn zwischen die freien Enden der Schreib-Lese-Köpfe einzuschiebenden Spiegelhalter;

Figur 2    einen Vertikalschnitt durch das Ausführungsbeispiel gemäß Figur 1;

Figur 3    eine perspektivische Ansicht eines zweiten Ausführungsbeispiels;

Figur 4    einen Vertikalschnitt durch das Ausführungsbeispiel gemäß Figur 3;

Figur 5    eine schematische Draufsicht auf ein drittes Ausführungsbeispiel für das seitliche Einschieben zwischen zugehörige Schreib-Lese-Köpfe; und

Figur 6    einen Schnitt entlang der Linie VI-VI in Figur 5;

Figur 7    einen Schnitt entlang der Linie VII-VII in Figur 6; und

Figur 8    eine perspektivische Darstellung des dritten Ausführungsbeispiels nach den Figuren 5 - 7.

In den Figuren sind bei allen Ausführungsbeispielen gleiche Teile durchweg mit gleichen Bezugszeichen versehen.

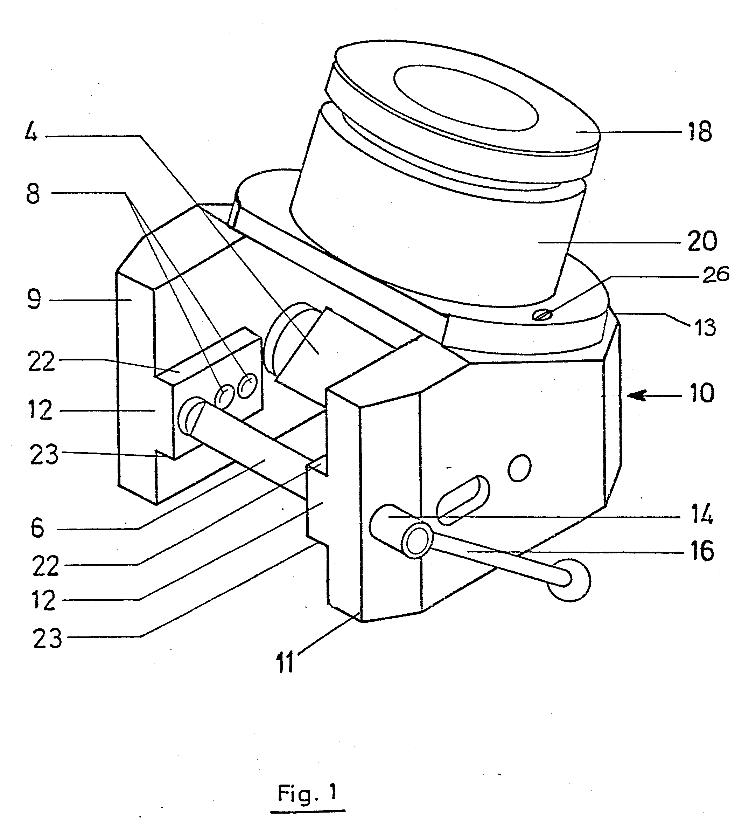

Figur 1 zeigt eine Vorrichtung zur Inspektion von Schreib-Lese-Köpfen von Datenträgerplatten in EDV-Anlagen mit einem Spiegelhalter 10, der zwei zueinander etwa parallele Seitenwände 9 und 11 aufweist. Die Seitenwände 9 und 11 sind durch eine Rückwand 13 miteinander verbunden und an ihrem der Rückwand 13 gegenüberliegenden Ende offen, so daß sie in der Draufsicht U-förmig sind. An den einander zugewandten Flächen weisen die Seitenwände 9 und 11 Führungsvorsprünge 12 auf, die parallele Oberkanten 22 und Unterkanten 23 besitzen. Die Oberkanten 22 und die Unterkanten 23 dienen dazu, zwei übereinander an den Enden von Kragarmen montierte Schreib-Lese-Köpfe von EDV-Anlagen über ihre Halterungen auseinander gespreizt zu halten. Derartige Schreib-Lese-Köpfe für Datenträgerplatten sind dem Fachmann bekannt und werden beispielsweise in Datenspeichern der Firma Control Data Corp. verwendet.

Am Vorderende der Seitenwände 9 und 11 und damit im Abstand zur Rückwand 13 ist ein Schwenkspiegel 6 in einer Schwenkachse 14 gehaltert, die mit einem Ende, beispielsweise mit dem linken, in der linken Seitenwand 9 gelagert ist, während sich ihr rechtes Ende durch den Führungsvorsprung 12 und durch die rechte Seitenwand 11 nach außen erstreckt. Am freien, äußeren Ende der Schwenkachse 14 ist ein Schwenkhebel 16 angebracht, der ein Schwenken des Schwenkspiegels 6 von Hand über einen Winkel von bis zu 180$^{\circ}$ gestattet. Die Länge des Schwenkspiegels 6 entspricht etwa dem Abstand der Führungsvorsprünge 12 des Spiegelhalters 10 und damit in etwa der Breite von Schreib-Lese-Köpfen. Seine Dicke ist hingegen so gering, daß der parallel zu den Schreib-Lese-Köpfen gestellte Schwenkspiegel 6 ohne Gefahr der Berührung der Oberflächen der Schreib-Lese-Köpfe zwischen diese einschiebbar ist. In dem ersten Ausführungsbeispiel ist die Dicke des Schwenkspiegels 6 somit geringer als die Höhe der Führungsvorsprünge 12, auf deren Oberkanten 22 bzw. Unterkanten 23 die Halterungen der Schreib-Lese-Köpfe bei der Inspektion ruhen. Die Höhe der Seitenwände 9, 11 ist wesentlich größer als der Abstand der Oberkanten 22 von den Unterkanten 23 der Führungsvorsprünge 12, so daß der Spiegelhalter 10 nur von vorn zwischen die freien Enden der die Schreib-Lese-Köpfe tragenden Kragarme einschiebbar ist.

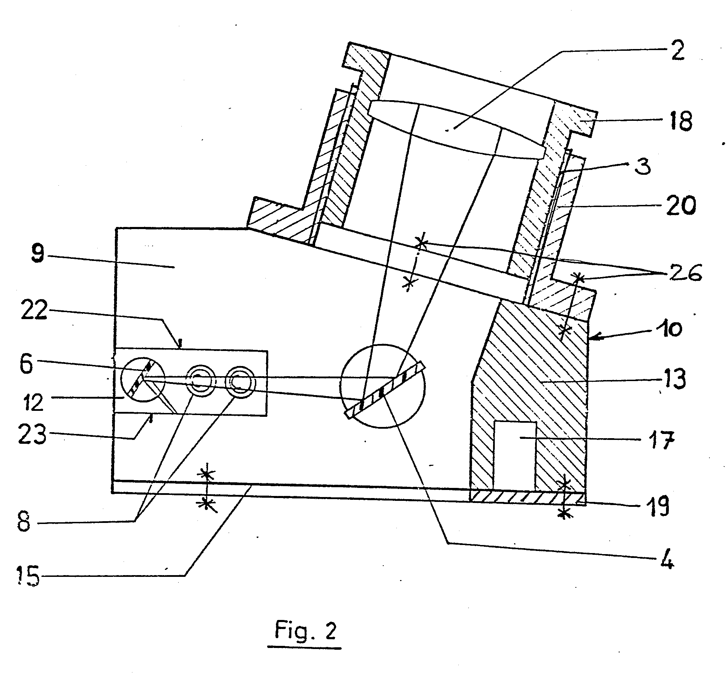

In horizontalem Abstand zum Schwenkspiegel 6 ist ein Umlenkspiegel 4 zwischen den Seitenwänden 9, 11 des Spiegelhalters 10 an sich fest montiert, jedoch zu Einstellzwecken verdrehbar. Im Betrieb ist seine einmal eingestellte Lage jedoch grundsätzlich unveränderbar. Der Umlenkspiegel 4 schließt gemäß Figur 2 mit dem Unterrand 15 des Spiegelhalters 10 einen Winkel von 30° bis 60°, vorzugsweise 35° bis 45° und insbesondere 38° ein. Dadurch wird der Strahlengang vom Schwenkspiegel 6 zum Umlenkspiegel 4 nach oben umgelenkt und auf eine Sammellinse 2 gerichtet. Die optische Achse der Sammellinse 2 schließt somit mit dem Strahlengang vom Schwenkspiegel 6 zum Umlenkspiegel 4 einen Winkel von etwa 90° ein. Die Sammellinse ist in einer Linsenfassung 18 gehaltert, welche in einem Fassungträger 20 in Richtung auf den Umlenkspiegel 4 verstellbar ist, beispielsweise durch ein Gewinde 3. Außerdem ist die Brennweite der Sammellinse 2 größer als der optische Weg von der Oberkante 22 oder der Unterkante 23 des Führungsvorsprungs 12 über den Schwenkspiegel 6 und den Umlenkspiegel 4 zur Hauptebene der Sammellinse 2. Dadurch stellt die Sammellinse 2 eine fokussierbare Lupe für einen mit Hilfe des Schwenkspiegels 6 zu betrachtenden Gegenstand dar.

Der Spiegelhalter 10, der Fassungsträger 20 und die Linsenfassung 18 sind in einer Ausführung aus Kunststoff hergestellt, und zwar vorzugsweise im Spritzgußverfahren geformt, was eine wirtschaftliche Herstellungsweise darstellt. Die Lampen 8, der Umlenkspiegel 4 und der Schwenkspiegel 6 sind in Bohrungen des Spiegelhalters 10 auf einfache Weise einsetzbar, so daß sich insgesamt eine wirtschaftlich herstellbare Vorrichtung ergibt.

In einer Ausführung ist der Schwenkspiegel 6 einseitig verspiegelt, so daß ein und dieselbe Spiegelfläche zur Betrachtung des oberen und des unteren Schreib-Lese-Kopfs herangezogen wird. In einer anderen Ausführung ist der Schwenkspiegel 6 ein Doppelspiegel mit zueinander parallelen Spiegelflächen, wodurch der Schwenkhebel 16 beim Betrachten von nicht dargestellten Schreib-Lese-Köpfen nur über einen verhältnismäßig kleinen Winkelbereich geschwenkt zu werden braucht, der zudem zweckmäßigerweise durch einen nicht dargestellten oberen und unteren Anschlag begrenzt ist. Es ist dem Fachmann klar, wie solche Anschläge an der Außenseite einer der Seitenwände 9 oder 11, beispielsweise an der Seitenwand 11 anzubringen sind.

Figur 2 zeigt außerdem eine Bodenplatte 19, welche einen Kabelkanal 17 verschließt. Der Kabelkanal 17 ist in den Spiegelhalter 10 eingeformt und dient zur Aufnahme von nicht dargestellten Kabeln, welche die Lampen 8 mit Strom versorgen. Hierzu sind die Kabel mit einem Ende an die Lampen 8 angeschlossen, während sie mit ihrem anderen Ende an eine nicht dargestellte, jedoch an sich bekannte Steckerbuchse angeschlossen sind. Die Steckerbuchse ist in einer Ausführung eine Bananensteckerbuchse. Der Fassungsträger 20 ist in einer Ausführung durch drei Schrauben 26 mit dem Spiegelhalter 10 verschraubt.

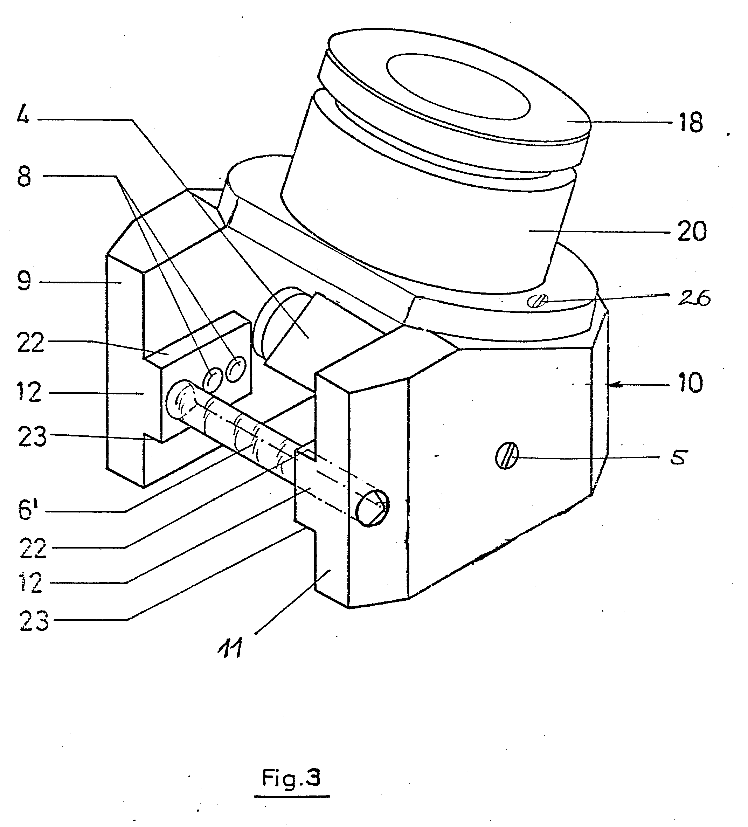

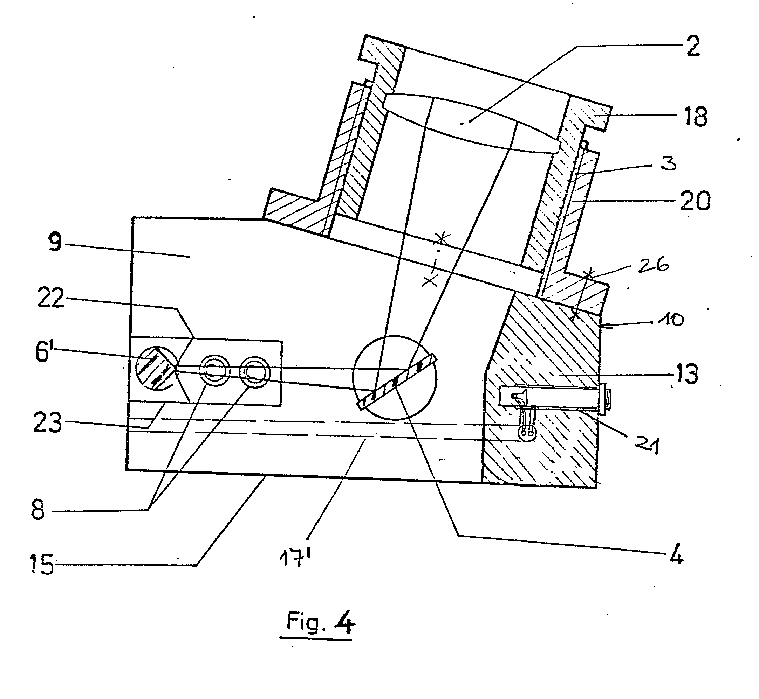

Figur 3 zeigt ein zweites Ausführungsbeispiel der Erfindung, bei dem anstelle des Schwenkspiegels 6 nach dem Ausführungsbeispiel gemäß den Figuren 1 und 2 ein Prismenspiegel 6' verwendet wird. Der Prismenspiegel 6' hat einen Winkel von vorzugsweise $90^\circ$, es ist jedoch auch ein kleinerer oder größerer Spiegelwinkel möglich. Es kommt lediglich darauf an, daß sowohl der obere, als auch der untere Schreib-Lese-Kopf gleichzeitig betrachtet werden können. Der Prismenspiegel 6' ist in einer Ausführung aus einem Rundstab gearbeitet, wodurch die Enden des Rundstabs in Bohrungen der Führungsvorsprünge 12 einsteckbar sind. Gemäß Figur 4 ist der Prismenspiegel 6' so ausgerichtet, daß seine Symmetrieebene parallel zu der Oberkante 22 bzw. der Unterkante 23 des Führungsvorsprungs 12 verläuft und damit den Umlenkspiegel 4 in der Mitte schneidet. Dadurch können gleichzeitig Lichtstrahlen von der oberen und unteren Spiegelfläche des Prismenspiegels 6' über den Umlenkspiegel 4 zur Sammellinse 2 gelenkt werden. Zur Verstellung des Abstandes der Sammellinse 2 in bezug auf den Umlenkspiegel 4 und damit zur Verkürzung oder Verlängerung des optischen Weges von einem zu betrachtenden Objekt über den Prismenspiegel 6' und den Umlenkspiegel 4 ist die Sammellinse 2 mit ihrer Linsenfassung 18 in dem Fassungsträger 20 durch ein Gewinde 3 höhenverstellbar.

Die Einstellung des Umlenkspiegels 4 ist durch eine in Figur 3 erkennbare Einstellschraube 5 vornehmbar. Nach der Einstellung vom Hersteller soll die Einstellschraube 5 grundsätzlich jedoch nicht mehr verändert werden.

Der Fassungsträger 20 ist mit dem Spiegelhalter 10 verbunden, und zwar in einer Ausführung beispielsweise durch drei Schrauben 26 verschraubt, die in dem dargestellten Ausführungsbeispiel lediglich angedeutet sind. Die Stromversorgung der Lampen 8 erfolgt wiederum über nicht dargestellte elektrische Leitungen oder Kabel, welche von den Lampen 8 durch einen Kabelkanal 17' zu einer Steckerbuchse 21 führen. Die Steckerbuchse 21 ist beispielsweise eine Bananensteckerbuchse, welche den Anschluß eines zweiadrigen Kabels gestattet. Wenn der Kabelkanal 17' wie bei dem Ausführungsbeispiel gemäß Figur 4 angedeutet im Abstand über dem Unterrand 15 durch die Seitenwände 9 und 11 verläuft, so braucht keine Bodenplatte 19 wie bei dem Ausführungsbeispiel gemäß Figur 2 vorgesehen zu sein.

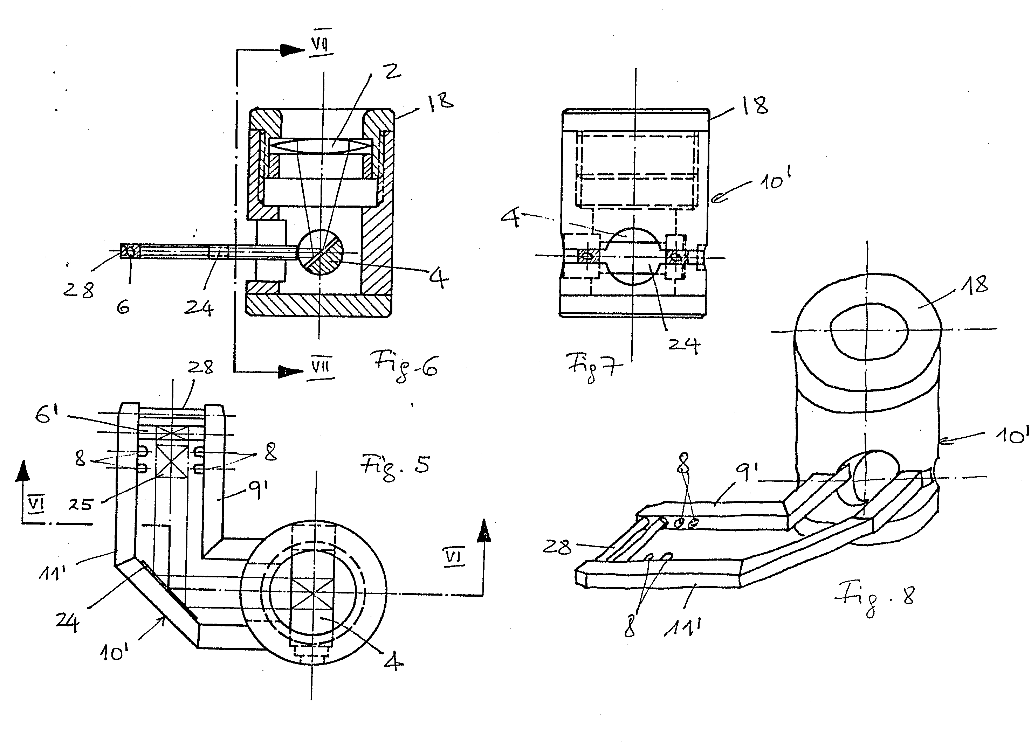

Die Figuren 5 bis 8 zeigen ein drittes Ausführungsbeispiel der Erfindung, welches zum seitlichen Einschieben zwischen die Halterung von Schreib-Lese-Köpfen vorgesehen ist. Dieses Ausführungsbeispiel weist einen etwa um 90° abgewinkelten Rahmen mit Seitenwänden 9' und 11' auf, deren Höhe etwa dem Abstand der Schreib-Lese-Kopfhalterungen entspricht und die damit etwa die Höhe der Führungsvorsprünge 12 der Ausführungsformen gemäß den Figuren 1 bis 4 haben. Dadurch können die Seitenwände 9' und 11' zwischen die Schreib-Lese-Kopfhalterungen eingeführt werden und es kann ein angedeutetes Keramikplättchen 25 eines Schreib-Lese-Kopfs im gegenüber einer Platte zurückgezogenen Zustand betrachtet werden, ohne daß die Platte entfernt werden muß.

Am Vorderende der Seitenwände 9' und 11' ist eine Verbindungsstange 28 angeordnet, welche die beiden Seitenwände 9' und 11' verbindet und dem Spiegelhalter 10' Festigkeit verleiht. In geringem Abstand hinter der Verbindungsstange 28 in Richtung auf einen weiteren Umlenkspiegel 24 ist wiederum ein Prismenspiegel 6' angeordnet. Vor dem Prismenspiegel 6' liegen in jeder Seitenwand 9' und 11' zwei Lampen 8, welche zur streifenden Beleuchtung der Schreib-Lese-Köpfe dienen. Der Prismenwinkel des Prismenspiegels 6' ist wiederum vorzugsweise 90°, er kann jedoch auch von diesem Winkel abweichen. Die zweckmäßigste Ausführung ist jedoch die 90°-Ausführung.

In einer anderen, nicht dargestellten Ausführung kann der Prismenspiegel 6' des Ausführungsbeispiels nach Figur 5 und 6 durch einen Schwenkspiegel wie bei den Ausführungsbeispielen gemäß den Figuren 1 bis 4 ersetzt sein.

Der weitere Umlenkspiegel 24 ist in einer Ausführung ein ebener Spiegel, in einer anderen nicht dargestellten Ausführung ein Prismenspiegel. Der Strahlengang von den Keramikplättchen 25 des unteren bzw. oberen Schreib-Lese-Kopfs wird somit über den Prismenspiegel 6' zu dem weiteren Umlenkspiegel 24 geleitet und von diesem auf den ersten Umlenkspiegel 4 umgelenkt, welcher den Strahlengang von dem zu betrachtenden Objekt durch die Sammellinse 2 führt.

Der Fassungsträger 20 ist bei dem Ausführungsbeispiel gemäß den Figuren 5 und 6 ähnlich wie bei den Ausführungsbeispielen gemäß den Figuren 1 bis 4 gebaut und wird daher nicht näher erläutert. Die Lampen 8 werden wiederum auf an sich bekannte Weise über in einem Kabelkanal 17' verlegte elektrische Kabel mit Strom versorgt.

1.  Vorrichtung zur Inspektion von Schreib-Lese-Köpfen von Datenträgerplatten in EDV-Anlagen, gekennzeichnet durch einen Spiegelhalter (10, 10') mit zwei zueinander etwa paralellen Seitenwänden (9, 11; 9', 11'), zwischen denen sich ein erster Umlenkspiegel (4) und ein Beobachtungsspiegel (6, 6') erstrecken; durch mindestens eine in mindestens einer Seitenwand (9 oder 11) angeordnete Lampe (8) und durch eine etwa rechtwinkelig zum Strahlengang vom Beobachtungsspiegel (6, 6') zum Umlenkspiegel (4) angeordnete Sammellinse (2), deren Brennweite größer ist als der optische Weg von einem in der Nähe des Beobachtungsspiegels (6, 6') zu betrachtenden Gegenstand bis zur Hauptebene der Sammellinse (2).

2.  Vorrichtung nach Anspruch 1, dadurch gekennzeichnet, daß der Beobachtungsspiegel (6') ein rechtwinkeliger Prismenspiegel ist.

3.  Vorrichtung nach Anspruch 1, dadurch gekennzeichnet, daß der Beobachtungsspiegel (6) ein Schwenkspiegel ist, der in einer Schwenkachse (14) gehaltert ist, welche eine der Seitenwände (11) des Spiegelhalters (10) durchsetzt und an ihrem freien, äußeren Ende einen Schwenkhebel (16) trägt.

4. Vorrichtung nach Anspruch 3, dadurch gekennzeichnet, daß die Länge des Schwenkspiegels (6) oder des Prismenspiegels (6') etwa dem Abstand der Seitenwände (9, 11; 9', 11;) voneinander entspricht und daß die Höhe des Schwenkspiegels (6) oder des Prismenspiegels (6') geringer als der senkrechte Abstand zweier übereinanderliegender Schreib-Lese-Köpfe ist.

5. Vorrichtung nach einem der Ansprüche 1 bis 4, dadurch gekennzeichnet, daß an den einander zugewandten Flächen der Seitenwände (9, 11) Führungsvorsprünge (12) zum Spreizen der Halterungen der Schreib-Lese-Köpfe vorgesehen sind.

6. Vorrichtung nach einem der Ansprüche 1 bis 5, dadurch gekennzeichnet, daß die Höhe der Seitenwände (9', 11') geringer oder gleich groß wie der Abstand der Halterungen (7) für die Schreib-Lese-Köpfe ist.

7. Vorrichtung nach Anspruch 6, dadurch gekennzeichnet, daß die Seitenwände (9', 11') abgewinkelt sind und im Bereich ihrer Abwinkelung einen weiteren Umlenkspiegel (24) tragen, welcher den Strahlengang vom Schwenkspiegel (6) oder vom Prismenspiegel (6') zu dem unter der Sammellinse (2) angeordneten ersten Umlenkspiegel (4) leiten.

*1/5*

Fig. 1

Fig. 2

Fig.3

Fig. 4

515

0116691

Fig. 8

Fig. 7

Fig. 6

Fig. 5